Europäisches Patentamt

European Patent Office

Office européen des brevets

(11) Veröffentlichungsnummer: **0 276 889 B1**

## EUROPÄISCHE PATENTSCHRIFT

(45) Veröffentlichungstag der Patentschrift: **30.12.92**

(51) Int. Cl.5: **G01L 9/06**, G01L 9/04

(21) Anmeldenummer: **88200095.3**

(22) Anmeldetag: **20.01.88**

(54) **Druckaufnehmer für statische Druckbelastungen mit einem Siliziumkörper.**

(30) Priorität: **28.01.87 DE 3702412**

(43) Veröffentlichungstag der Anmeldung:
**03.08.88 Patentblatt 88/31**

(45) Bekanntmachung des Hinweises auf die
Patenterteilung:
**30.12.92 Patentblatt 92/53**

(84) Benannte Vertragsstaaten:
**DE FR GB IT**

(56) Entgegenhaltungen:
GB-A- 2 128 806
US-A- 3 820 401
US-A- 4 462 018
US-A- 4 528 855
US-A- 4 592 238

PATENT ABSTRACTS OF JAPAN, Band 6, Nr.
221 (P-153)[1099], 5. November 1982; & JP-
A-57 125 827 (MITSUBISHI DENKI K.K.)
05-08-1982

PATENT ABSTRACTS OF JAPAN, Band 5, Nr.
192 (E-85)[864], 8. Dezember 1981; & JP-A-56
114 378 (HITACHI SEISAKUSHO K.K.)
08-09-1981

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

(73) Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Graeger, Volker, Dr.
Hochkamp 10a
W-2110 Buchholz(DE)**
Erfinder: **Kobs, Ralf
Kastanienring 5
W-2082 Tornesch(DE)**

(74) Vertreter: **Kupfermann, Fritz-Joachim,
Dipl.-Ing. et al
Philips Patentverwaltung GmbH Wendenstrasse 35 Postfach 10 51 49
W-2000 Hamburg 1(DE)**

## Beschreibung

Die Erfindung bezieht sich auf einen Druckaufnehmer für statische Druckbelastungen mit einem Siliziumkörper, der auf einem Trägersubstrat angeordnet ist und einen zum Trägersubstrat offenen sacklochartigen Hohlraum aufweist, wodurch sich eine Membran bildet, die parallel zur Grundfläche des Siliziumkörpers liegt, die die Außenfläche bildet und in einer dem Trägersubstrat entgegengesetzten (111)-Kristallebene liegt, auf deren Außenfläche eine aus piezoresistiven Widerstandselementen aufgebaute Wheatstone-Brücke angeordnet ist, von der zwei Widerstandselemente zentrisch auf der Membran und zwei Widerstandselemente am Außenrand der Membran aufgebracht sind.

Aus der US-Patentschrift 3,820,401 A ist ein entsprechender Druckaufnehmer für statische Druckbelastungen bekannt, bei dem eine Membran parallel zu einer (111)-Kristallebene eines Siliziumkörpers liegt und die Widerstandselemente in diesen eindiffundiert sind. Aus der US-Patentschrift 4,528,855 A ist ferner ein ähnlicher Druckaufnehmer für die Messung statischer und auch differentieller Druckbelastungen bekannt, bei dem ein sacklochartiger, als Ringnut ausgebildeter und zum Trägersubstrat offener Hohlraum vorgesehen ist, allerdings als Lösung für das Problem der gleichzeitigen Messung des statischen und des differentiellen Druckes. Der Hohlraum wird dabei auf der Seite des

Trägersubstrats von Widerstandselementen überspannt. Ein derartiges Zusammenwirken von Hohlräumen und Widerstandselementen ist wenig geeignet die bei hohen statischen Druckbelastungen auftretenden Nichtlinearitäten der elektrischen Spannungs-Druck-Kennlinie positiv zu beeinflussen.

Ein entsprechender Druckaufnehmer ist ferner aus der Zeitschrift "Siemens-Forschungs- und Entwicklungsberichte", Band 13, 1984, Nr. 6, Springer-Verlag, Seiten 294 bis 302 bekannt. Dieser besteht aus einem einkristallinen Siliziumkörper, der auf einer als Trägersubstrat ausgebildeten Glasplatte angeordnet ist. Die Außenfläche des Siliziumkörpers, die dem Trägersubstrat entgegengesetzt ist, wird als Grundfläche bezeichnet. Diese Grundfläche, die in der (111)-Kristallebene liegt, beinhaltet die Außenfläche der Membran. Die piezoresistiven Widerstandselemente sind auf dem Siliziumkörper integriert (eindiffundiert). Die eine Wheatstone-Brücke bildenden piezoresistiven Widerstandselemente sind auf den Bereichen der Membran angebracht, wo die größten mechanischen Spannungen auftreten, um ein entsprechend großes elektrisches Signal zu erhalten.

Aufgrund des piezoresistiven Effektes ändert jedes Widerstandselement mit dem Widerstandswert R seinen Wert nach der Gleichung:

$$dR/R = \pi r \, \sigma r + \pi t \, \sigma t$$

wobei $\sigma r$ und $\sigma t$ die radiale bzw. tangentiale mechanische Spannung im Siliziumkörper, $\pi r$ und $\pi t$ die radiale bzw. tangentiale piezoresistive Konstante sind und dR der Wert der Widerstandsänderung ist Die piezoresistiven Konstanten werden durch die Wahl des Widerstandsmaterials und der Kristallorientierung festgelegt.

Die Widerstandselemente sind so angebracht, daß die Widerstandsänderung der Widerstände dem Betrage nach gleich sind, die Widerstandsänderung zweier Elemente gleich und dem anderen Elementenpaar entgegengesetzt ist. Um dies zu erreichen, müssen die Widerstandselemente so angeordnet werden, daß bei Druckbelastung entweder

a) die mechanischen Spannungen an den entsprechenden Widerstandselementen das Vorzeichen wechseln und die piezoresistiven Konstanten für alle Elemente ungefähr gleich sind oder
b) die mechanischen Spannungen für alle Widerstände das gleiche Vorzeichen haben und die piezoresistiven Konstanten an den entsprechenden Widerstandselementen das Vorzeichen wechseln.

Für Membranen, die parallel zur (111)-Kristallebene liegen, müssen die Widerstandselemente gemäß Punkt a) angeordnet werden.

Aus der oben genannten Zeitschrift ist es bekannt, daß für eine Druckbelastung unter 250 bar aufgrund der großen Zugfestigkeit die (111)-Kristallebene als Grundfläche des Siliziumkörpers ausgewählt wird. Bei Druckbelastungen über 250 bar wird jedoch die elektrische Spannungs-Druck-Kennlinie in einem unzulässigem Maße nichtlinear. Es ergibt sich eine Nichtlinearität von über einem Prozent. Diese große Nichtlinearität ist dadurch bedingt, daß auf der Außenfläche starke Druckspannungen im Zentrum der Membran (Kompression) und keine Zugspannungen an der Membran und sehr geringe Zugspannungen außerhalb der Membran auftreten. Diese mechanische Spannungsverteilung führt zu einer ungleichen Widerstandsänderung in der Meßbrücke, wodurch die Nichtlinearität herrührt. Deshalb wird bei den bekannten Druckaufnehmern für eine hohe Druckbelastung die (100)-Kristallebene als Grundfläche gewählt, wo die Widerstandselemente gemäß Punkt b) angeordnet sind. Für die Druckaufnehmerfertigung bedeutet dies einen zweiten Herstellungsprozeß, d.h. es müssen für hohe Druckbelastungen Siliziumkörper mit der (100)-Kristallebene als Grundfläche und für geringe Druckbelastungen Siliziumkörper mit der (111)-Kristallebene als Grundfläche hergestellt werden.

Es sind ebenfalls Druckaufnehmer mit einem Siliziumkörper bekannt, bei dem die Widerstandselemente nicht integriert (eindiffundiert) sind, sondern als Dünnschichtwiderstände ausgebildet sind. Zwischen dem Siliziumkörper, der einen sacklochartigen Hohlraum aufweist, und den Dünnschichtwiderständen ist eine Isolierschicht, beispielsweise aus Siliziumnitrid oder Siliziumoxid, aufgebracht. Wirkt auf diesen Druckaufnehmer eine Druckbelastung von über 250 bar ein, so hat sich gezeigt, daß hierbei die elektrische Spannungs-Druck-Kennlinie in einem unzulässigen Maße nichtlinear wird.

Es sei noch erwähnt, daß aus der EP-A 0 111 640 ein Druckaufnehmer bekannt ist, bei dem die Widerstandselemente gemäß Punkt b) angeordnet sind. Der Druckaufnehmer enthält vier sacklochartige Hohlräume, die kreisförmig angeordnet sind und wodurch vier Membranen gebildet werden. Die Außenflächen der Membranen liegen parallel zur (100)-Kristallebene. Außerhalb der kreisförmigen Anordnung, in der Nähe jeder Membran, sind vier Widerstandselemente angeordnet und zwar an einer solchen Stelle, wo zwischen der tangentialen und radialen mechanischen Spannung der größte Unterschied besteht. Durch die Wahl von vier sacklochartigen Hohlräumen anstatt eines großen sacklochartigen Hohlraumes soll die Bruchfestigkeit des Druckaufnehmers vergrößert werden.

Der Erfindung liegt die Aufgabe zugrunde, einen Druckaufnehmer zu schaffen, bei dem die Nichtlinearität der elektrischen Spannungs-Druck-Kennlinie bei hohen Druckbelastungen verringert ist.

Diese Aufgabe wird bei einem Druckaufnehmer der eingangs genannten Art dadurch gelöst, daß im Siliziumkörper am Außenrand der Membran im Bereich der äußeren Widerstandselemente mindestens ein weiterer zum Trägersubstrat offener Hohlraum vorgesehen ist.

Bei diesem Druckaufnehmer wird neben dem sacklochartigen Hohlraum an der Membran noch mindestens ein weiterer Hohlraum an dem Außenrand der Membran angebracht. Der bzw. die zusätzlichen Hohlräume müssen auf jeden Fall im Bereich der äußeren Widerstandselemente vorgesehen sein. Aufgrund wenigstens eines Hohlraumes entsteht auf der Grundfläche eine sehr viel größere mechanische Zugspannung als beim bekannten Druckaufnehmer. Hierdurch wird die Nichtlinearität der elektrischen Spannungs-Druck-Kennlinie verringert. Der erfindungsgemäße Druckaufnehmer kann daher nicht nur für Druckbelastungen unter 250 bar, sondern auch für Druckbelastungen um die 1000 bar entworfen werden.

Beispielsweise können zwei Hohlräume als Längsnuten neben den Widerstandselementen angeordnet werden, die am Außenrand der Membran liegen. Als weitere Möglichkeit ergibt sich, den sacklochartigen Hohlraum im Querschnitt kreisförmig auszubilden und den weiteren Hohlraum als Ringnut um den sacklochartigen Hohlraum herumzuführen. Hierdurch wird eine einfache Konstruktion erreicht. Die Ringnut läßt sich nämlich ebenso wie die eigentliche Membran im selben Arbeitsvorgang mit Hilfe von Ätztechniken herstellen.

Es sei weiterhin erwähnt, daß aus der US-PS 45 28 855 ein Druckaufnehmer bekannt ist, der aus einem einkristallinen Siliziumkörper besteht. Der Siliziumkörper ist auf einer als Trägersubstrat ausgebildeten Siliziumplatte angeordnet. Die Grundfläche des Siliziumkörpers (die Außenfläche des Siliziumkörpers, die dem Trägersubstrat entgegengesetzt ist), liegt in der (100)-Kristallebene. Zum Trägersubstrat hin weist der Siliziumkörper einen offenen, sacklochartigen Hohlraum und einen weiteren als Ringnut ausgebildeten Hohlraum um den sacklochartigen Hohlraum auf. Am Außenrand der inneren Membran sind wenigstens vier piezoresistive Widerstandselemente symmetrisch aufgebracht. Auf der ringförmigen Membran befinden sich ebenfalls piezoresistive Widerstandselemente. Der auf dem Trägersubstrat aufgebrachte Siliziumkörper befindet sich in einem Gehäuse, das zwei Öffnungen aufweist. Durch die eine Öffnung kann eine Flüssigkeit fließen, die auf die Grundfläche des Siliziumkörpers einwirkt. Durch die andere Öffnung fließt über eine weitere Öffnung im Trägersubstrat eine Flüssigkeit in den sacklochartigen Hohlraum. Die innere Membran ist also Teil eines Differenzdruckaufnehmers. Bei diesem Differenzdruckaufnehmer treten bei hohen Druckbelastungen (über 250 bar) keine Linearitätsprobleme auf, da die Grundfläche parallel zur (100)-Kristallebene gewählt ist und die Widerstandselemente am Rande der Membran angeordnet sind (die Widerstandselemente sind gemäß Punkt b) angeordnet). Demgegenüber ist der erfindungsgemäße Druckaufnehmer für statische Druckbelastungen ausgelegt, bei dem zwei Widerstandselemente zentrisch auf der Membran und zwei Widerstandselemente am Außenrand der Membran angebracht sind. Der weitere Hohlraum dient zur Linearisierung der Spannungs-Druck-Kennlinie.

In einer Weiterbildung der Erfindung ist vorgesehen, daß die Tiefen des sacklochartigen Hohlraumes und der Ringnut annähernd gleich sind, daß der Abstand zwischen den beiden Hohlräumen annähernd gleich der Hälfte des Durchmessers der Membran ist und daß die Breite der Ringnut einen Wert zwischen der Hälfte des Durchmessers und dem Durchmesser der Membran besitzt. Hierdurch wird eine Nichtlinearität der Kennlinie von kleiner als 0,1 % erreicht, wie durch experimentielle Untersuchungen bei einer Druckbelastung von 300 bis 1200 bar ermittelt worden ist.

Ein Druckaufnehmer kann so ausgebildet sein, daß die Membran parallel zur (111)-Kristallebene des Siliziumkörpers liegt und daß die Widerstandselemente in diesen eindiffundiert sind.

Als weitere Möglichkeit ist vorgesehen, daß die Widerstandselemente als Dünnschichtwiderstandselemente aufgebaut sind. Hierbei ist die Kristallorientierung bzw. die Kristallebene der Grundfläche des Siliziumkörpers beliebig.

Ausführungsbeispiele der Erfindung werden nachstehend anhand der Zeichnungen näher erläutert. Es zeigen:

Fig. 1 eine Draufsicht eines Druckaufnehmers mit einem Siliziumkörper, bei dem die Widerstandselemente integriert sind,

Fig. 2 einen Längsschnitt des Druckaufnehmers längs der Ebene II-II der Fig. 1,

Fig. 3 den radialen bzw. tangentialen mechanischen Spannungsverlauf des Druckaufnehmers entlang der Linie II-II der Fig. 1 und

Fig. 4 einen Längsschnit eines Druckaufnehmers mit einem Siliziumkörper und Dünnschichtwiderstandselementen.

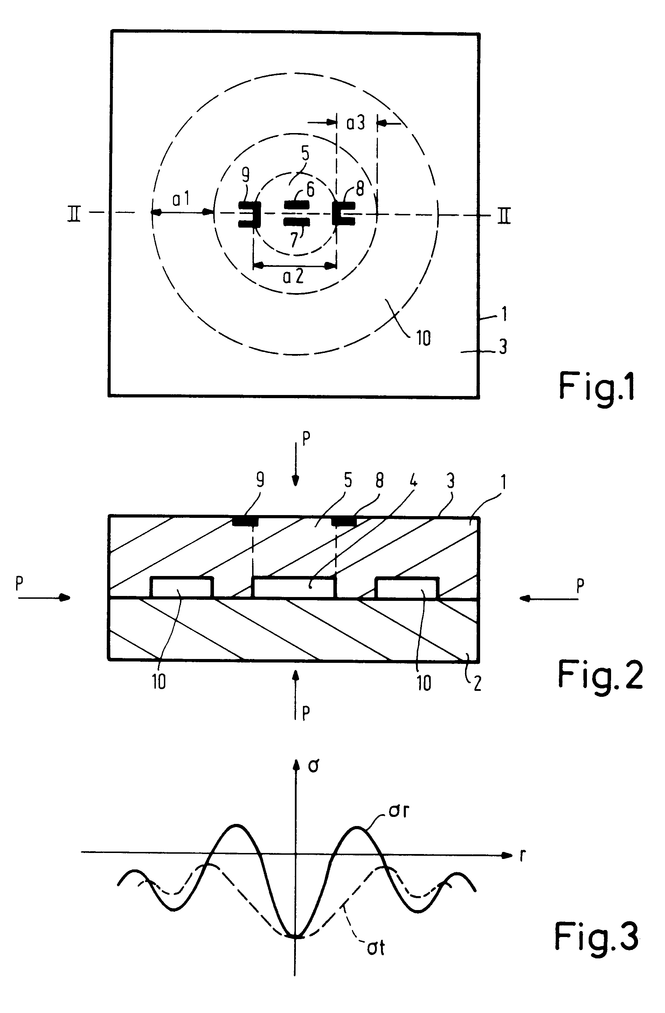

Der Druckaufnehmer nach den Fig. 1 und 2 enthält einen quaderförmigen Siliziumkörper 1, der beispielsweise durch anodisches Bonden auf ein Trägersubstrat 2 aufgebracht ist. Das Trägersubstrat 2 kann beispielsweise eine Glasplatte sein. Die Grundfläche 3 des Siliziumkörpers 1 liegt in einer (111)-Kristallebene und ist die Außenfläche, die dem Trägersubstrat 2 entgegengesetzt liegt. Im Siliziumkörper 1 ist ein sacklochartiger Hohlraum 4 vorhanden, der einen kreisförmigen Querschnitt hat und zum Trägersubstrat 2 hin geöffnet ist. Aufgrund dieses Hohlraumes 4 bildet sich eine kreisförmige Membran 5, die parallel zur (111)-Kristallebene liegt und auf der vier Widerstandselemente 6 bis 9 angeordnet sind.

Die Widerstandselemente 6 und 7 sind als Längsstreifen parallel im Zentrum der Membran 5 angeordnet. Die Widerstandselemente 8 und 9 sind als U-förmige Streifen ausgebildet und am Außenrand der Membran 5 parallel so angeordnet, daß die U-förmige Öffnung der Widerstandselemente 8 bzw. 9 der Membran 5 entgegengesetzt ist. Die U-förmige Öffnung der Widerstandselemente 8 bzw. 9 könnte auch zur Membran 5 zeigen. Die vier Widerstandselemente 6 bis 9 sind im Siliziumkörper 1 integriert und mit hier nicht näher dargestellten elektrischen Zuleitungen verbunden, so daß mit diesen Elementen eine Wheatstone-Brücke gebildet werden kann.

Der bisher beschriebene Druckaufnehmer ist bekannt und wird für Druckbelastungen bis 250 bar verwendet. Bei höheren Druckbelastungen ergab sich eine Nichtlinearität von über einem Prozent der elektrischen Spannungs-Druck-Kennlinie. Durch die Erfindung wird die Nichtlinearität verringert, indem ein weiterer Hohlraum in den Siliziumkörper 1 eingebracht ist. Dieser weitere Hohlraum ist als Ringnut 10 mit einem U-förmigen Querschnitt um den Hohlraum 4 herumgeführt und zum Trägersubstrat 2 hin geöffnet. Vorzugsweise sollte die Tiefe des sacklochartigen Hohlraumes 4 und der Ringnut 10 annähernd gleich sein. Die Breite a1 der Ringnut 10 soll einen Wert zwischen der Hälfte des Durchmessers a2 und dem Durchmesser a2 der Membran 5 besitzen und der Abstand a3 zwischen den beiden Hohlräumen 4 und 10 soll annähernd gleich der Hälfte des Durchmessers a2 der Membran 5 sein. Bei praktischen Untersuchungen wurde festgestellt, daß solche Druckaufnehmer bei einer hydrostatischen Druckbelastung von 300 bis 1200 bar eine Nichtlinearität der elektrischen Spannungs-Druck-Kennlinie von kleiner als 0,1 % aufweisen.

Der mechanische Spannungsverlauf an der Grundfläche, der sich für einen solchen Druckaufnehmer entlang der Linie II-II bei der Fig. 1 für die radiale bzw. tangentiale mechanische Spannungs-Komponente ergab, ist in Fig. 3 dargestellt. Der tangentiale Spannungsverlauf $\sigma t$ ist durch eine unterbrochene Linie dargestellt. Bei dem radialen Spannungsverlauf $\sigma r$, der als ausgezogene Linie gezeichnet ist, treten positive radiale Spannungen zwischen der Membran und der Ringnut auf. Aufgrund dieser viel größeren positiven radialen Spannung im erfindungsgemäßen Druckaufnehmer als im bekannten Druckaufnehmer wird eine sehr viel geringere Nichtlinearität der Kennlinie erzielt.

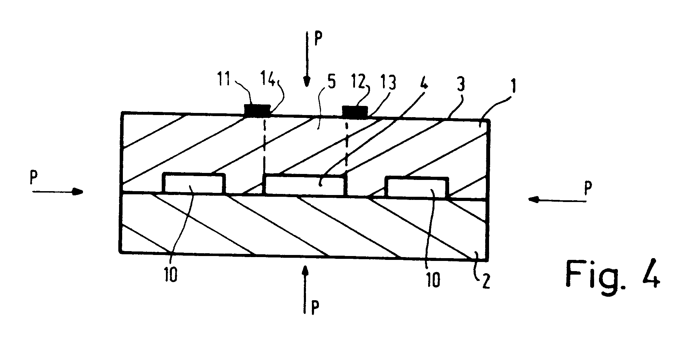

Ein weiterer Druckaufnehmer ist in Fig. 4 dargestellt. Bis auf die Anordnung der Widerstandselemente ist der Aufbau des Druckaufnehmers identisch mit dem, der in den Fig. 1 und 2 dargestellt ist. Der Siliziumkörper 1, der auf dem Trägersubstrat 2 aufgebracht ist, enthält ebenfalls den sacklochartigen Hohlraum 4 mit einem kreisförmigen Querschnitt. Um den sacklochartigen Hohlraum 4 ist die Ringnut 10 herumgeführt. Aufgrund des Hohlraumes 4 bildet sich die Membran 5. Bei diesem Druckaufnehmer ist die Kristallorientierung beliebig, d.h. die Grundfläche 3 kann in einer beliebigen Kristallebene liegen.

Der in Fig. 4 dargestellte Druckaufnehmer weist keine integrierten Widerstandselemente sondern vier Dünnschichtwiderstandselemente auf. Zwei dieser Dünnschichtwiderstandselemente sind, wie in den Fig. 1 und 2 gezeigt, ebenfalls als Längsstreifen parallel im Zentrum der Membran 5 angeordnet. Die beiden anderen Dünnschichtwiderstandselemente 11 und 12 sind als U-förmige Streifen ausgebildet und am Außenrand der Membran parallel angeordnet. Die letztgenannten Dünnschichtwiderstandselemente 11 und 12 sind vom Siliziumkörper 1 durch jeweils eine Isolationsschicht 13 bzw. 14, die beispielsweise aus Siliziumnitrid oder Siliziumoxid bestehen kann, getrennt. Die vier Dünnschichtwiderstandselemente sind mit hier nicht näher dargestellten elektrischen Zuleitungen verbunden, so daß mit diesen Elementen ebenfalls eine Wheatstone-Brücke gebildet werden kann.

Der in Fig. 4 dargestellte Druckaufnehmer weist bei hohen Druckbelastungen eine geringe Nichtlinearität der elektrischen Spannungs-Druck-Kennlinie auf.

## Patentansprüche

1. Druckaufnehmer für statische Druckbelastungen mit einem Siliziumkörper (1), der auf einem Trägersubstrat (2) angeordnet ist und einen zum Trägersubstrat (2) offenen sacklochartigen Hohlraum (4) aufweist, wodurch sich eine Membran (5) bildet, die parallel zur Grundfläche des Siliziumkörpers (1) liegt, die die Außenfläche bildet und in einer dem Trägersubstrat (2) entgegengesetzten (111)-Kristallebene liegt, auf deren Außenfläche eine aus piezoresistiven Widerstandselementen (6 bis 9; 11, 12) aufgebaute Wheatstone-Brücke angeordnet ist, von der zwei Widerstandselemente (6, 7) zentrisch auf der Membran und zwei Widerstandselemente (8, 9; 11, 12) am Außenrand der Membran aufgebracht sind, dadurch gekennzeichnet, daß im Siliziumkörper (1) am Außenrand der Membran (5) im Bereich der äußeren Widerstandselemente (8, 9; 11, 12) mindestens ein weiterer zum Trägersubstrat (2) offener Hohlraum (10) vorgesehen ist.

2. Druckaufnehmer nach Anspruch 1, dadurch gekennzeichnet, daß der sacklochartige Hohlraum (4) im Querschnitt kreisförmig ausgebildet und der weitere Hohlraum als Ringnut (10) um den sacklochartigen Hohlraum herumgeführt ist.

3. Druckaufnehmer nach Anspruch 2, dadurch gekennzeichnet, daß die Tiefen des sacklochartigen Hohlraumes (4) und der Ringnut (10) annähernd gleich sind, daß der Abstand (a3) zwischen den beiden Hohlräumen (4, 10) annähernd gleich der Hälfte des Durchmessers (a2) der Membran (5) ist und daß die Breite (a1) der Ringnut (10) einen Wert zwischen der Hälfte des Durchmessers (a2) und dem Durchmesser (a2) der Membran (5) besitzt.

4. Druckaufnehmer nach einem der vorhergehenden Ansprüche, dadurch gekennzeichnet, daß die Membran (5) parallel zur (111)-Kristallebene des Siliziumkörpers (1) liegt und daß die Widerstandselemente (6 bis 9) in diesen eindiffundiert sind.

5. Druckaufnehmer nach einem der Ansprüche 1 bis 3, dadurch gekennzeichnet, daß die Widerstandselemente als Dünnschichtwiderstandselemente (11, 12) aufgebaut sind.

## Claims

1. A pressure sensor for static pressure loads, comprising a silicon body (1) which is arranged on a substrate (2) and which comprises a cavity (4) in the form of a blind hole which opens towards the substrate (2), thus forming a diaphragm (5) which extends parallel to the base of the silicon body (1), which base forms the outer surface and is situated in a (111) crystal plane which is remote form the substrate (2), on which outer surface there is arranged a Wheatstone bridge consisting of piezoresistive resistance elements (6 to 9; 11, 12), two resistance elements (6, 7) thereof being centrically arranged on the diaphragm whilst the other two resistance elements (8, 9; 11, 12) are arranged at the edge of the diaphragm, characterized in that in the silicon body (1) at least one further cavity (10) which opens towards the substrate (2) is provided at the area of the outer resistance elements (8, 9; 11, 12) arranged at the edge of the diaphragm (5).

2. A pressure sensor as claimed in Claim 1, characterized in that the blind-hole cavity (4) has a circular cross-section, the further cavity being an annular groove (10) that surrounds the blind-hole cavity.

3. A pressure sensor as claimed in Claim 2, characterized in that the depths of the blind-hole cavity (4) and the annular groove (10) are substantially equal, the distance (a3) between the two cavities (4, 10) being approximately equal to half the diameter (a2) of the diaphragm (5), the width (a1) of the annular groove (10) having a value between one half of the diameter (a2) and the full diameter (a2) of the diaphragm (5).

4. A pressure sensor as claimed in any one of the preceding Claims, characterized in that the diaphragm (5) is situated parallel to the (111) crystal plane of the silicon body (1), the resistance elements (6 to 9) being diffused therein.

5. A pressure sensor as claimed in any one of the Claims 1 to 3, characterized in that the resistance elements are formed by thin-film resistance elements (11, 12).

**Revendications**

1. Capteur de pression pour charges de pression statiques muni d'un corps en silicium (1), qui est disposé sur un substrat porteur (2) et qui présente un creux (4) en forme de trou borgne ouvert du côté du substrat porteur (2), de sorte qu'il se forme une membrane (5) située parallèlement à la surface de base du corps en silicium (1), qui constitue la surface extérieure et qui est située dans un plan cristallin à orientation 111 opposé à celui du porteur de substrat (2), sur la surface extérieure de laquelle est disposé un pont de Wheatstone constitué d'éléments de résistance piézorésistifs (6 à 9; 11, 12), deux éléments de résistance (6, 7) étant fixés au centre sur la membrane et deux éléments de résistance (8, 9; 11, 12) au bord extérieur de la membrane, caractérisé en ce que dans le corps en silicium (1), au bord extérieur de la membrane (5), dans la zone des éléments de résistance extérieurs (8, 9; 11, 12), on a prévu au moins encore un autre creux (10) ouvert du côté du porteur de substrat (2).

2. Capteur de pression selon la revendication 1, caractérisé en ce que le creux (4) en forme de trou borgne présente une section transversale circulaire et en ce que l'autre creux est conçu comme rainure annulaire (10) entourant le creux en forme de trou borgne.

3. Capteur de pression selon la revendication 2, caractérisé en ce que les profondeurs du creux (4) en forme de trou borgne et de la rainure annulaire (10) sont approximativement égales, en ce que l'écart (a3) séparant les deux creux (4, 10) est approximativement égal à la moitié du diamètre (a2) de la membrane (5) et en ce que la largeur (a1) de la rainure annulaire (10) présente une valeur située entre la moitié de son diamètre (a2) et le diamètre (a2) de la membrane (5).

4. Capteur de pression selon l'une quelconque des revendications précédentes, caractérisé en ce que la membrane (5) est située parallèlement au plan cristallin à orientation 111 du corps en silicium (1) et en ce que les éléments de résistance (6 à 9) sont intégrés par diffusion.

5. Capteur de pression selon l'une des revendications 1 à 3, caractérisé en ce que les éléments de résistance sont conçus comme éléments de résistance à couches minces (11, 12).

Fig.1

Fig.2

Fig.3

Fig. 4